(19) **Europäisches Patentamt**

**European Patent Office**

**Office européen des brevets**

(11) **EP 1 206 123 B1**

(12) **EUROPÄISCHE PATENTSCHRIFT**

(45) Veröffentlichungstag und Bekanntmachung des Hinweises auf die Patenterteilung:
**12.07.2006 Patentblatt 2006/28**

(51) Int Cl.:
***H04N 1/60*** *(2006.01)*

(21) Anmeldenummer: **01126901.6**

(22) Anmeldetag: **12.11.2001**

(54) **Verfahren zur Falschfarbendarstellung von Bildinformation**

Method for false color representation of image data

Procédé pour la représentation de données d'images en couleurs fausses

(84) Benannte Vertragsstaaten:
**AT BE CH CY DE DK ES FI FR GB GR IE IT LI LU MC NL PT SE TR**

(30) Priorität: **12.11.2000 DE 10055837**

(43) Veröffentlichungstag der Anmeldung:
**15.05.2002 Patentblatt 2002/20**

(73) Patentinhaber: **Maier, Thomas, Dipl.-Ing.**
**52080 Aachen (DE)**

(72) Erfinder: **Maier, Thomas, Dipl.-Ing.**
**52080 Aachen (DE)**

(74) Vertreter: **Stute, Ivo Peter et al**
**Alt-Niederkassel 75**
**40547 Düsseldorf (DE)**

(56) Entgegenhaltungen:
**EP-A- 0 723 363          WO-A-92/03855**
**WO-A-96/16507          US-A- 5 243 414**

EP 1 206 123 B1

## Beschreibung

Die Erfindung betrifft ein Verfahren zur Anpassung von Bildinformationen an die Wahrnehmungsfähigkeit des menschlichen Auges.

Farbe ist eine Gesichtsempfindung, die durch elektromagnetische Strahlung ausgelöst und durch das Auge vermittelt wird. Erst im Gehirn erfolgt die Umwandlung der von außen kommenden Energie des Farbreizes zur eigentlichen Farbempfindung. Farbe ist also keine objektive physikalische Eigenschaft eines Körpers oder einer Lichtquelle, sondern eine subjektive Wahrnehmung. Dabei ist die Wahrnehmung von Helligkeitsabstufungen und Farbabstufungen stark abhängig von der jeweiligen Helligkeit und Farbe bzw. der Farbsättigung. So können verschiedene Farb- oder Helligkeitsabstufungen, die sich in der Frequenz und Amplitude der elektromagnetischen Strahlung im sichtbaren Bereich sicher nachweisen lassen, teilweise gar nicht, nur schwach oder verzerrt wahrgenommen werden.

Zur Beschreibung von Farben werden auf unterschiedlichen Prinzipien beruhende Farbräume verwendet. So gibt es beispielsweise den ein additives Farbsystem beschreibenden RGB-Farbraum, den darauf basierenden HSB-Farbraum, den ein subtraktives Farbsystem beschreibenden CMYK-Farbraum oder den alle vom menschlichen Auge wahrnehmbaren Farben beschreibenden CIE-Normfarbraum. Allen diesen Farbräumen ist gemeinsam, daß der Farbabstand zwischen Farben, die innerhalb der Farbräume einen jeweils gleichen Abstand zueinander aufweisen, aus dem oben genannten Grund physiologisch unterschiedlich wahrgenommen wird.

Demgegenüber gibt es verschiedene Modelle zur Transformation von Farbräumen in Empfindungsfarbräume, in denen der geometrische Farbabstand innerhalb dieser Farbräume dem physiologisch wahrgenommenen Farbabstand entspricht. Beispielsweise basiert das CIE-L*a*b-System auf einer mathematischen Transformation des CIE-Normfarbraums.

Aus der subjektiv unterschiedlichen Wahrnehmung von Farbunterschieden ergibt sich insbesondere bei der visuellen Auswertung von Bildinformationen ein erhebliches Problem. Beispielsweise sind in der Bildvorlage eines Röntgenbildes eine Vielzahl von meßbaren Bildinformationen enthalten, deren Darstellung in verschiedenen nah beieinander liegenden Graustufen für das menschliche Auge nicht oder nur kaum unterscheidbar sind. Diese Informationen können somit visuell überhaupt nicht oder nur schlecht ausgewertet werden.

Zur besseren Auswertung von insbesondere radiologischen Bilddaten wird in DE 4437467 C1 vorgeschlagen, linienhafte Strukturen deutlicher herauszustellen, indem einzelne Bildpunkte dadurch hervorgehoben werden, daß die Bildsignalwerte dieser Bildpunkte in Abhängigkeit von den Bildsignalwerten benachbarter Bildpunkte verstärkt werden. Ist der Kontrast zueinander beabstandeter Bildpunkte hoch, wird dieser Kontrast verstärkt. Ist er niedrig, kommt keine Verstärkung zum Tragen. Somit ist das Verfahren nicht geeignet, nah beieinander liegende Bildpunkte mit sehr ähnlichen Farbwerten besser voneinander unterscheidbar zu machen. Ein weiterer Nachteil ist, daß die Bildinformation verzerrt und hierdurch verfälscht wird. Schließlich ist das notwendigerweise zu verwendende mathematische Verfahren aufwendig.

Der vorliegenden Erfindung liegt die Aufgabe zugrunde, ein Verfahren der eingangs genannten Art zu schaffen, mit dem sämtliche meßtechnisch erfaßbaren Bildinformationen so dargestellt werden, daß sie visuell wahrnehmbar und damit auswertbar sind.

Gelöst wird diese Aufgabe mit einem Verfahren mit den folgenden Schritten:

a. Darstellen von Helligkeitswerten sowie Farbwerten bzw. Buntheitsstufen einer Bildvorlage als Punktwolke in einem Ausgangsfarbraum;

b. Übertragen der Punktwolke in einen physiologisch im wesentlichen gleichabständigen Empfindungsfarbraum unter Beibehaltung der Geometrie der Punktwolke innerhalb der in den Empfindungsfarbraum projizierten Grenzen eines Ausgabefarbraums;

c. Transformation der Punktwolke aus dem Empfindungsfarbraum in den Ausgabefarbraum unter Verwendung der zwischen dem Empfindungsfarbraum und dem Ausgabefarbraum bestehenden Transformationsgleichungen;

d. Darstellen den Bildvorlage als Falschfarbendarstellung mit Helligkeitswerten und Farbwerten bzw. Buntheitsstufen entsprechend der im Ausgabefarbraum enthaltenen Punkte.

Unter Farbraum wird im Folgenden jeder nicht empfindungsgemäß gleichabständige Farbraum verstanden, wie es beispielsweise der RGB-Farbraum, der CMYK-Farbraum, der HSI-Farbraum, der CIE-Normfarbraum oder ein hierzu vergleichbarer Farbraum ist. In diesen Farbräumen entspricht der räumliche Abstand zweier Farben nicht zwingend dem physiologisch wahrgenommenen Farbabstand.

Unter Empfindungsfarbraum wird im Folgenden jeder Raum zur Farbdarstellung verstanden, in dem die räumlichen Entfernungen der Farben voneinander im wesentlichen den vom menschlichen Auge wahrnehmbaren Farbabständen entsprechen.

Der Ausgabefarbraum ist der Farbraum, auf dessen Farbbestimmung die Farbe eines Bildpunktes des dargestellten Bildes beruht. Der Ausgabefarbraum kann, muß aber nicht der gleiche sein wie der Ausgangsfarbraum.

Wird die Punktwolke unter Beibehaltung ihrer Geometrie aus dem Ausgangsfarbraum in den Empfindungsfarbraum übertragen, kann sie in jedem Bereich innerhalb der in den Empfindungsfarbraum projizierten Grenzen des Ausgaberaums eingesetzt werden. Dabei muß sie gegebenenfalls in ihrer Größe so angepaßt werden, daß sie vollständig innerhalb dieser Grenzen Platz findet. Sofern notwendig kann sie verkleinert werden, wobei das Verhältnis der Abstände der einzelnen Punkte zueinander gleich bleiben muß, um einen unnötigen Verlust von Bildinformationen zu vermeiden. Sind die im Empfindungsfarbraum darstellbaren Farbwerte sämtlich im Ausgabefarbraum enthalten, bilden die Grenzen des Ausgabefarbraums keine räumliche Einschränkung.

Der Kerngedanke der Erfindung beruht darauf, daß jeder Farbwert einer Information entspricht, wobei der Farbabstand zweier Bildpunkte etwas über die Beziehung der Bildpunkte zueinander aussagt. Werden nun die Farbwerte der einzelnen Bildpunkte eines Bildes in einem empfindungsgemäß nicht gleichabständigen Farbraum, beispielsweise einem RGB-Farbraum, als Punkte aufgetragen, die entstandene Punktwolke geometrisch unverändert in einen Empfindungsfarbraum übertragen, danach in einen Ausgabefarbraum transformiert und die Bildpunkte des Bildes mit den Farbwerten im Ausgaberaum dargestellt, liegt im Ergebnis eine Falschfarbendarstellung des ursprünglichen Bildes vor, in dem gleiche Farbabstände zwischen verschiedenen Bildpunkten für das Auge auch als gleiche Farbabstände erfaßbar sind.

Somit geht zwar die absolute Farbinformation des Bildes verloren, im Gegenzug werden aber gerade bei im ursprünglichen Bild äußerst nah beieinander liegende Farben im Falschfarbenbild so dargestellt, daß der dazwischenliegende Farbabstand erkennbar wird. Die Auswertbarkeit von Bildvorlagen wird dadurch unter Verlust der Farbechtheit signifikant verbessert.

Eine solche Darstellung von Bildinformationen ist somit genau dann besonders geeignet, wenn es nicht auf die Farbechtheit der Darstellung ankommt, so bei wesentlichen bildgebenden Meßverfahren wie beispielsweise in der medizinischen Diagnostik zur Darstellung von Röntgen- Ultraschall-, CT- oder Kernspintomographie - Bildern, in der Materialprüfung zur Darstellung von Strahlungs-, Schwingungs- und Schallbildern, in der Geographie und Meteorologie zur Darstellung von Infrarotbildern und Photographien oder in der Mikroskopie zur Darstellung von Elektronenrasterbildern.

Insbesondere eignen sich als Empfindungsräume die unter den Namen CIE-L*a*b oder ein CIE-LUV bekannten Farbsysteme. Sie sind als physiologisch im wesentlichen gleich abständige Farbräume anerkannt und basieren auf empirischen Versuchen zum Farbempfinden von Menschen.

Die in den Empfindungsraum übertragene Punktwolke kann darin manipuliert werden, um eine noch bessere Darstellung der in den meßbaren Farbabständen enthaltenen Informationen zu verdeutlichen. Dabei sollte die Punktwolke im Empfindungsraum innerhalb der in den Empfindungsfarbraum projizierten Grenzen des Ausgabefarbraums möglichst einer Ähnlichkeitsabbildung unterworfen werden, so daß die Verhältnisse der Farbabstände zueinander gewahrt bleiben. Es kann aber auch von Vorteil sein, die Punktwolke zu verzerren. Beispielsweise können durch eine Verzerrung der Punktwolke eine Anpassung der Bildinformation an Sehschwächen eines Betrachters, beispielsweise an eine Rot-Grün-Blindheit, vorgenommen werden.

In einer bevorzugten Ausgestaltung des erfindungsgemäßen Verfahrens wird die Punktwolke im Empfindungsfarbraum innerhalb der in den Empfindungsfarbraum projizierten Grenzen des Ausgabefarbraums bis an die Grenzen des Ausgabefarbraums ausgedehnt. Durch das Ausdehnen wird der Farbabstand zwischen den einzelnen Farbwertpunkten erhöht. Im Falle von unbunten Bildvorlagen kann eine Erhöhung der Anzahl unterscheidbarer Grauabstufungen um einen Faktor von 3.5 erreicht werden.

Auch kann zur verbesserten Darstellung der Farbinformationen die Lage und/oder die Ausrichtung der Punktwolke im Empfindungsfarbraum geändert werden.

Schließlich kann im Fall einer linienförmigen Punktwolke diese unter Beibehaltung der relativen Farbabstände einzelner Bildpunkte auf eine andere Linie abgebildet werden. Eine solche Verfahrensweise bietet sich insbesondere zur Falschfarbendarstellung einer unbunten Bildvorlage an. So kann eine unbunte Punktwolke, die sich auf der zentralen Mittelachse eines CIE L*a*b-Farbraum erstreckt, in eine spiralförmig um die zentrale Schwarz/Weiß-Achse des Farbraums verlaufende Punktwolke übertragen werden. Auf diese Weise werden verschiedene Graustufen in eine Vielzahl von Farben umgesetzt.

Im Folgenden wird die Erfindung anhand von Figuren, die eine beispielhafte Ausführung des Verfahrens zeigen, näher erläutert. Es zeigen

Figuren 1 a - d      eine wesentlich vereinfachte schematische Darstellung des Verfahrensablaufs in einem Ausgangsfarbraum und einem Empfindungsfarbraum, und

Figur 2      ein Ablaufdiagramm des Verfahrens.

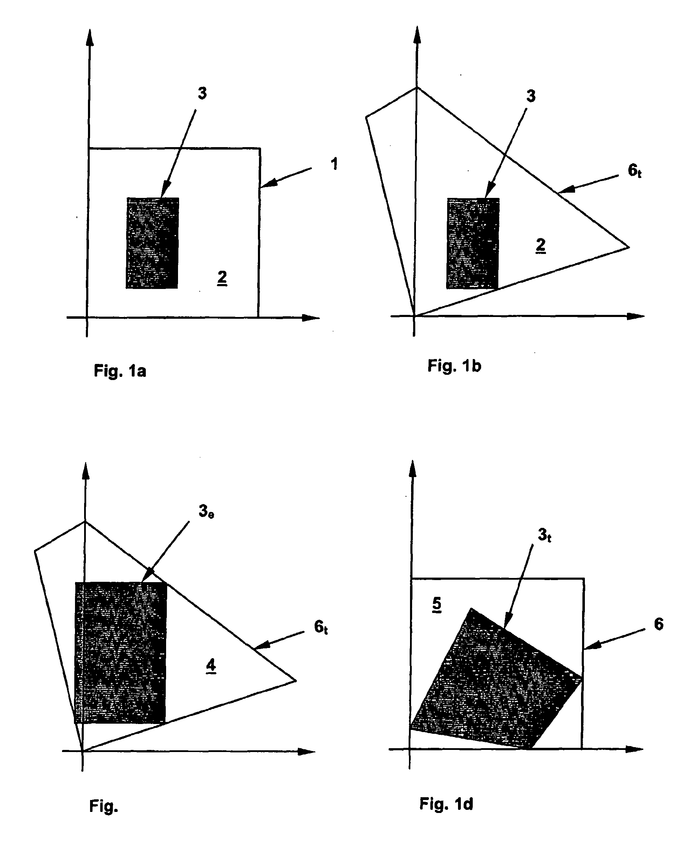

Zunächst werden alle in einem Ausgangsfarbraum darstellbaren Farbwerte einer Bildvorlage als Punkte in den Ausgangsfarbraum eingetragen und bilden eine Punktwolke. Der Ausgangsfarbraum hat die Eigenschaft, daß der räumliche Abstand zweier Farben im Ausgangsfarbraum nicht zwingend dem physiologisch wahrgenommenen Farbabstand entspricht. Der Ausgangsfarbraum kann beispielsweise ein HSI - Farbraum oder ein RGB - Farbraum sein. In Figur **1** a ist schematisch die Umhüllende **1** eines Ausgangsfarbraums **2** dargestellt. Innerhalb dieses Farbraums ist eine (hier schematisch dargestellte) Punktwolke **3** aufgetragen, die alle in dem Ausgangsfarbraum darstellbaren Farbwerte einer zu bearbeitenden Bildvorlage umfaßt.

Die Punktwolke **3** wird in ihrer im Ausgangsfarbraum **2** bestehenden geometrischen Form in einen Empfindungsfarbraum **4** übertragen, wobei die Punktwolke **3** innerhalb einer in den Empfindungsfarbraum **4** transformierten Umhüllenden 6, eines Ausgabefarbraums **5** angeordnet wird. Figur 1 b zeigt die in einen Empfindungsfarbraum **4** transformierte Umhüllende **6_t** des Ausgabefarbraums **5**. Die Punktwolke **3** in ihrer im Ausgangsfarbraum **2** festgelegten Geometrie ist im Empfindungsfarbraum **4** innerhalb der transformierten Umhüllenden **6_t** angeordnet.

Die Punktwolke **3** wird im Empfindungsfarbraum **4** bis an die Grenzen der transformierten Umhüllenden **6_t** des Ausgabefarbraums **5** ausgedehnt, wobei das geometrische Verhältnis der Abstände der Punkte voneinander beibehalten wird. In Figur 1 c ist die bis an die Grenzen der transformierten Umhüllenden **6_t** ausgedehnte Punktwolke **3_e** dargestellt.

Die ausgedehnte Punktwolke **3_e** wird unter Anwendung von zwischen dem Empfindungsfarbraum **4** und dem Ausgabefarbraum **5** bestehenden Transformationsgleichungen in den Ausgabefarbraum **5** transformiert. Dementsprechend ist in Figur 1 d die transformierte Punktwolke **3_t** in der Umhüllenden **6** des Ausgabefarbraums **5** dargestellt. Der Ausgabefarbraum **5** kann dabei jeder Farbraum sein, dessen Farbwertparameter zur Bildwiedergabe verwendet werden können.

Der Ausgabefarbraum **5** könnte beispielsweise ein RGB - Farbraum zur Bildschirmwiedergabe oder ein CMYK - Farbraum oder ein Pantonefarbraum zur Druckwiedergabe sein. Bei geeigneten Wiedergabemedien könnte aber auch der Empfindungsfarbraum selbst Ausgabefarbraum sein. In diesem Fall bestünde die Transformation in einer 1:1 - Transformation und müßte nicht durchgeführt werden. Im Sinne dieser Anmeldung wird eine (gegebenenfalls nicht durchgeführte) 1:1 - Transformation als Bestandteil des Verfahrens angesehen.

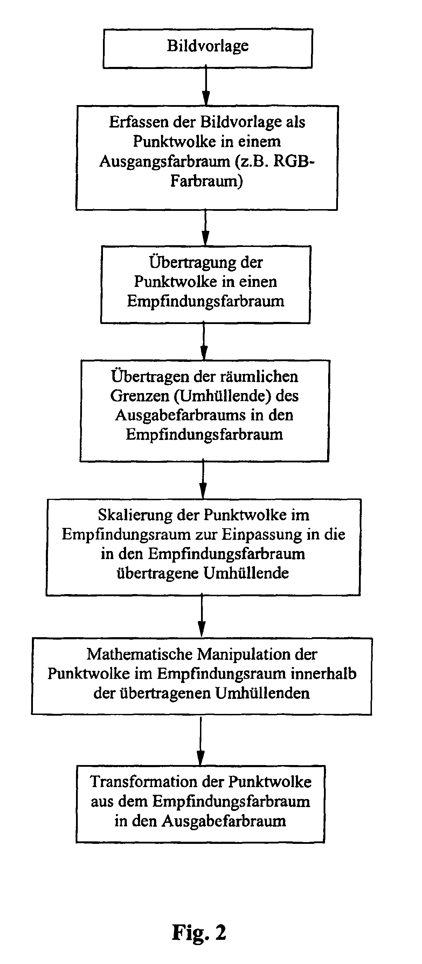

Figur 2 zeigt ein Ablaufdiagramm des erfindungsgemäßen Verfahrens. Zunächst werden die Farbwerte der einzelnen Bildpunkte einer Bildvorlage in einem Ausgangsfarbraum, hier ein RGB-Farbraum mit den Wertebereichen 0 <= R,G,B <= 1, eingetragen. Die einzelnen Farbwerte bilden eine Punktwolke.

Die Punktwolke wird in einem nächsten Schritt unter Beibehaltung ihrer Geometrie in einen Empfindungsfarbraum umgesetzt, und zwar innerhalb der in den Empfindungsfarbraum transformierten Umhüllenden eines Ausgabefarbraums. Hier dargestellt ist die Umrechnung der Umhüllenden des RGB-Farbraums (R=0, R=1, G=0, G=1, B=0, B=1) in den CIE-Lab - Empfindungsfarbraum. Die Umrechnung ergibt sich aus den folgenden Transformationsgleichungen:

$$(1)\ X = 0{,}490\ R + 0{,}310\ G + 0{,}200\ B$$

$$(2)\ Y = 0{,}177\ R + 0{,}812\ G + 0{,}011\ B$$

$$(3)\ Z = 0{,}000\ R + 0{,}010\ G + 0{,}990\ B$$

$$(4)\ L = 88{,}469444 \log ( 12{,}5\ Y + 1 )$$

$$(5)\ a = 500 ( X^{1/3} - Y^{1/3})$$

$$(6)\ b = 200 ( Y^{1/3} - Z^{1/3})$$

Damit die Punktwolke vollständig innerhalb der transformierten Umhüllenden im Empfindungsfarbraum angeordnet werden kann, muß sie gegebenenfalls symmetrieerhaltend umskaliert, d.h. verkleinert werden.

Die in den Empfindungsfarbraum übertragene Punktwolke kann innerhalb der transformierten Umhüllenden gegebenenfalls mathematisch manipuliert werden. So ist es möglich, die Punktwolke ohne Änderung ihrer geometrischen Form, beispielsweise zur besseren Ausnutzung des Ausgabefarbraumes, auszudehnen. Die Punktwolke kann auch verschoben oder gedreht werden, beispielsweise um sie auf die Schwarz/Weiß-Achse des Empfindungsfarbraums auszurichten. Auch können die Farbwerte durch Verformung der Punktwolke an bestehende teilweise Farbblindheiten (rot/grün oder gelb/blau) des Betrachters angepaßt werden.

Im weiteren können im Empfindungsfarbraum andere übliche Bildbearbeitungsverfahren wie Histogrammäqualisationen, allgemeine Grauwerttransformationen oder Filterabbildungen verwendet werden, ebenso wie bekannte Verfahren zur Pseudokolorierung oder Falschfarbendarstellung, Kantendetektion, Bildschärfung, Kontrasterhöhung, Rauschunterdrückung, Bildkorrektur und Bildverbesserung.

Abschließend wird die gegebenenfalls mathematisch manipulierte Punktwolke in einen Ausgabefarbraum transformiert unter Anwendung der zwischen den Räumen bestehenden Transformationsgleichungen. Zum Beispiel kann die Punktwolke aus dem CIE-Lab-Farbraum in den RGB-Farbraum transformiert werden mit den Gleichungen:

$$(7) \quad X = ( ( a/500) + Y^{1/3} )^3$$

$$(8) \quad Y = ( 10^{(L/88,469444)} - 1) / 12,5$$

$$(9) \quad Z = ( Y^{1/3} - b/200 ) )^3$$

$$(10) \quad R = 2,365\,X - 0,897\,Y - 0,468\,Z$$

$$(11) \quad G = -0,515\,X + 1,426\,Y + 0,089\,Z$$

$$(12) \quad B = 0,005\,X - 0,014\,Y + 1,009\,Z$$

**Patentansprüche**

1. Verfahren zur Anpassung von Bildinformationen an die Wahrnehmungsfähigkeit des menschlichen Auges durch Erstellen einer Falschfarbendarstellung so dass in einem Ausgangsfarbraum geometrisch gleiche Farbabstände zwischen verschiedenen Bildpunkten eines ursprünglichen Bildes in der Falschfarbendarstellung für das menschliche Auge als gleiches Farbabstände erfassbar sind, mit den folgenden Schritten:

   a. Darstellen von Helligkeitswerten sowie Farbwerten bzw. Buntheitsstufen einer Bildvorlage als Punktwolke (3) im Ausgangsfarbraum (2);
   b. Übertragen der Punktwolke (3) in einen physiologisch im wesentlichen gleichabständigen Empfindungsfarbraum (4) unter Beibehaltung der Geometrie der Punktwolke (3) innerhalb der in den Empfindungsfarbraum (4) projizierten Grenzen eines Ausgabefarbraums (5);
   c. Transformation der Punktwolke (3) aus dem Empfindungsfarbraum (4) in den Ausgabefarbraum (5) unter Verwendung der zwischen dem Empfindungsfarbraum (4) und dem Ausgabefarbraum (5) bestehenden Transformationsgleichungen;
   d. Darstellen der Bildvorlage als Falschfarbendarstellung Helligkeitswerten und Farbwerten bzw. Buntheitsstufen entsprechend der im Ausgabefarbraum (5) enthaltenen Punkte.

2. Verfahren nach Anspruch 1, **dadurch gekennzeichnet, daß** der Empfindungsfarbraum (4) ein CIE-L*a*b- oder ein CIE-LUV- Farbraum ist.

3. Verfahren nach Anspruch 1 oder 2, **dadurch gekennzeichnet, daß** die Punktwolke im Empfindungsraum innerhalb der in den Empfindungsfarbraum (4) projizierten Grenzen des Ausgabefarbraums (5) einer Ähnlichkeitsabbildung unterworfen wird.

4. Verfahren nach Anspruch 1 oder 2, **dadurch gekennzeichnet, daß** die Punktwolke (3) im Empfindungsfarbraum (4) bis an die in den Empfindungsfarbraum (4) projizierten Grenzen des Ausgabefarbraums (5) ausgedehnt wird.

**5.** Verfahren nach Anspruch 3 oder 4, **dadurch gekennzeichnet, daß** die Lage und/oder die Ausrichtung der Punktwolke (3) im Empfindungsfarbraum (4) geändert wird.

**6.** Verfahren nach einem der vorstehenden Ansprüche, **dadurch gekennzeichnet, daß** im Fall einer linienförmigen Punktwolke diese unter Beibehaltung der relativen Farbabstände einzelner Bildpunkte im Empfindungsraum auf eine andere Linie abgebildet wird.

**Claims**

**1.** Method of adapting image information to the perceptive capacity of the human eye by providing a false colour representation, so that geometrically equal colour distances in an initial colour space between different pixels of an original image are perceivable as equally spaced colour distances for the human eye in the false colour representation, having the following steps:

a. displaying lightness values and colorimetric values or chromaticity steps from an original image as a group of points (3) in said initial colour space (2);
b. transferring the group of points (3) into a physiologically substantially equal-spaced perceived colour space (4) whilst maintaining the geometry of the group of points (3) within the limits of an output colour space (5) projected into the perceived colour space (4);
c. transforming the group of points (3) from the perceived colour space (4) into the output colour space (5) by using the transformation equations existing between the perceived colour space (4) and the output colour space (5);
d. displaying the image as false colour representation with lightness values and colorimetric values or chromaticity steps in accordance with the points contained in the output colour space (5).

**2.** Method according to Claim 1, **characterized in that** the perceived colour space (4) is a CIE-L*a*b* or a CIE-LUV colour space.

**3.** Method according to Claim 1 or 2, **characterized in that** the group of points in the perceived space within the limits of the output colour space (5) projected into the perceived colour space (4) is subjected to a similarity projection.

**4.** Method according to Claim 1 or 2, **characterized in that** the group of points (3) in the perceived colour space (4) is expanded as far as the limits of the output colour space (5) projected into the perceived colour space (4).

**5.** Method according to Claim 3 or 4, **characterized in that** the position and/or the orientation of the group of points (3) in the perceived colour space (4) is changed.

**6.** Method according to one of the preceding claims, **characterized in that**, in the event of a linear group of points, these are projected onto another line whilst maintaining the relative colour distances between individual image points in the perceived space.

**Revendications**

**1.** Procédé pour adapter des informations d'image à la perceptivité de l'oeil humain à l'aide de l'élaboration d'une représentation en fausses couleurs, de sorte que des distances chromatiques, géométriquement égales dans un espace des couleurs, initial, entre différents points d'image d'une image d'origine sont perceptibles par l'oeil humain dans la représentation en fausses couleurs en tant que distances chromatiques égales, avec les étapes suivantes :

a. représentation des valeurs de luminosité ainsi que des valeurs chromatiques ou des saturations d'une image-modèle sous la forme d'un nuage de points (3) dans l'espace des couleurs initial (2) ;
b. transfert du nuage de points (3) dans l'espace des couleurs de perception (4) physiologiquement équidistant pour l'essentiel en conservant la géométrie du nuage de points (3) à l'intérieur des limites d'un espace des couleurs de sortie (5), projetées dans l'espace des couleurs de perception (4) ;
c. transformation du nuage de points (3) de l'espace des couleurs de perception (4) dans l'espace des couleurs de sortie (5) en employant les équations de transformation existantes entre l'espace des couleurs de perception (4) et l'espace des couleurs de sortie (5) ;

d. représentation de l'image-modèle sous forme de représentation en fausses couleurs avec des valeurs de luminosité et des valeurs chromatiques ou des saturations correspondant aux points contenus dans l'espace des couleurs de sortie.

2. Procédé selon la revendication 1, **caractérisé en ce que** l'espace des couleurs de perception (4) est un espace CIE-L\*a\*b ou CIE-LUV.

3. Procédé selon la revendication 1 ou 2, **caractérisé en ce que** le nuage de points dans l'espace de perception est soumis à une transformation de similitude à l'intérieur des limites de l'espace des couleurs de sortie (5), projetées dans l'espace des couleurs de perception (4).

4. Procédé selon la revendication 1 ou 2, **caractérisé en ce que** le nuage de points (3) dans l'espace des couleurs de perception (4) est étendu jusqu'aux limites de l'espace des couleurs de sortie (5), projetées dans l'espace des couleurs de perception (4).

5. Procédé selon la revendication 3 ou 4, **caractérisé en ce que** la position et/ou l'orientation du nuage de points (3) sont modifiés dans l'espace des couleurs de perception (4).

6. Procédé selon l'une quelconque des revendications précédentes, **caractérisé en ce que**, dans le cas d'un nuage de points de forme linéaire, celui-ci est transformé en une autre droite en respectant les distances chromatiques relatives de points d'image individuels dans l'espace de perception.

**Fig. 1a**

**Fig. 1b**

**Fig.**

**Fig. 1d**

```
┌─────────────────────────────┐
│         Bildvorlage         │
└─────────────────────────────┘
              │
              ▼
┌─────────────────────────────┐
│   Erfassen der Bildvorlage als  │
│      Punktwolke in einem     │
│  Ausgangsfarbraum (z.B. RGB-  │
│          Farbraum)           │
└─────────────────────────────┘
              │
              ▼
┌─────────────────────────────┐
│      Übertragung der        │
│     Punktwolke in einen      │
│     Empfindungsfarbraum      │
└─────────────────────────────┘
              │
              ▼
┌─────────────────────────────┐
│   Übertragen der räumlichen  │
│    Grenzen (Umhüllende) des  │
│     Ausgabefarbraums in den  │
│     Empfindungsfarbraum      │
└─────────────────────────────┘
              │
              ▼
┌─────────────────────────────┐
│   Skalierung der Punktwolke im │
│  Empfindungsraum zur Einpassung in die │
│    in den Empfindungsfarbraum  │
│     übertragene Umhüllende    │
└─────────────────────────────┘
              │
              ▼
┌─────────────────────────────┐
│  Mathematische Manipulation der │
│ Punktwolke im Empfindungsraum innerhalb │
│    der übertragenen Umhüllenden │
└─────────────────────────────┘
              │
              ▼
┌─────────────────────────────┐
│   Transformation der Punktwolke │
│    aus dem Empfindungsfarbraum  │
│      in den Ausgabefarbraum    │
└─────────────────────────────┘
```

# Fig. 2